# EUROPÄISCHE PATENTSCHRIFT

(11) **EP 0 648 346 B1**
(45) Veröffentlichungstag und Bekanntmachung des Hinweises auf die Patenterteilung: **16.07.1997**
(21) Anmeldenummer: 94914320.0
(22) Anmeldetag: 03.05.1994
(51) Int. Cl.: G03B 21/20, G03B 23/18

(54) **PROJEKTOR**
PROJECTOR
PROJECTEUR

(30) Priorität: 03.05.1993 DE 4314457
(43) Veröffentlichungstag der Anmeldung: 19.04.1995
(73) Patentinhaber: Rollei Fototechnic GmbH, 38126 Braunschweig (DE)
(72) Erfinder: KNUTZEN, Hans, Hinrich, D-38114 Braunschweig (DE)
(74) Vertreter: Gramm, Werner, Prof., Dipl.-Ing.
(86) Internationale Anmeldenummer: DE9400510
(87) Internationale Veröffentlichungsnummer: WO9425897

(56) Entgegenhaltungen:
- EP-A- 0 023 535
- DE-A- 3 517 376
- DE-A- 3 532 723
- US-A- 4 094 599

## Beschreibung

Die Erfindung betrifft einen Projektor mit wenigstens einem Projektionsobjektiv, einem dem Projektionsobjektiv zugeordneten, aus einer ersten Betriebsstellung bzw. einer Projektionsstellung in eine zweite Betriebsstellung bzw. eine Wechselstellung innerhalb des Projektors annähernd parallel zur optischen Achse des Projektionsobjektives verfahrbaren Schlitten, der zumindest eine Halterung bzw. eine Diabühne für eine zu projezierende durchleuchtbare Bildvorlage trägt, und wenigstens einem jeweils einem Projektionsobjektiv zugeordneten Kondensorsystem zur Beleuchtung der durchleuchtbaren Bildvorlage, wobei das Kondensorsystem wenigstens eine Lampe, einen Hohlspiegel, zumindest eine Kondensorlinse und eine Wärmeschutzvorrichtung für die Bildvorlage und die Halterung bzw. die Diabühne umfaßt.

Solche Projektoren sind z. B. aus der DE-PS 35 17 376 bekannt und haben trotz der aufwendigen Mechanik den besonderen Vorzug, daß mit solchen Projektoren eine Überblendprojektion mit Bildvorlagen aus einem gemeinsamen Magazin möglich ist, d. h., daß die zu projezierenden Vorlagen nicht entsprechend der Projektionsfolge auf verschiedene Magazine verteilt werden müssen, sondern sogar in beliebiger Kombination und Reihenfolge einem herkömmlichen Magazin entnommen werden können. Die Zuordnung je eines Kondensorsystems zu einem Projektionsobjektiv erlaubt eine gute Lichtausbeute.

Nachteilig bei solchen Projektoren ist jedoch, daß die Verfahrgeschwindigkeit des Schlittens zwischen seinen beiden Betriebsstellungen und damit die erzielbare Bildwechselfrequenz durch das hohe Gewicht der auf den Schlitten angebrachten Kondensorsysteme beschränkt ist. Zwar ließe sich die Verfahrgeschwindigkeit der Schlitten durch Verwendung leistungsfähigerer Antriebe erhöhen, jedoch würde dies durch die beim Beschleunigen und Verzögern des Schlittens auftretenden Reaktionskräfte zu Erschütterungen des Projektors und damit zu einem Zittern des gleichzeitig projezierten Bildes der anderen Bildvorlage führen.

Weiterhin ist es bei solchen Projektoren nachteilig, daß der relativ hohe elektrische Strom zum Betrieb der üblicherweise verwendeten Niedervoltlampen auf den beweglichen Schlitten übertragen werden muß. Erfolgt dies durch eine fest angeschlossene Kabelschleppe, benötigt diese aufgrund der hohen Steifigkeit der erforderlichen großen Kabelquerschnitte relativ viel Platz. Bei Verwendung von Schleifkontakten, die in der Projektionsstellung des Schlittens einen elektrischen Kontakt ermöglichen, besteht stets die Gefahr von Funktionsstörungen. Bereits kleinste Übergangswiderstände, z. B. durch Staub, führen bei den großen zu übertragenden Strömen zu einem Leistungsverlust. Die dadurch bedingte Erhitzung der Schleifkontakte fördert deren Oberflächenkorrosion, wodurch der Übergangswiderstand und damit die Leistungsverluste weiter ansteigen.

Schließlich ist bei den bekannten Projektoren noch nachteilig, daß das Beschleunigen und Abbremsen der heißen Lampe zu einem vorzeitigen unvorhergesehenen Ausfall der Lampe führen kann.

Der Erfindung liegt daher die Aufgabe zugrunde, einen Projektor der eingangs beschreibenen Art hinsichtlich seiner Gebrauchseigenschaften und seiner Zuverlässigkeit zu verbessern.

Diese Aufgabe wird erfindungsgemäße gelöst durch einen Projektor der eingangs erwähnten Art, der dadurch gekennzeichnet ist, daß das Kondensorsystem eine erste, im Projektor feststehende Baugruppe, die zumindest die Lampe, den Hohlspiegel und eine Kondensorlinse enthält, und eine zweite, auf dem Schlitten angeordnete, wenigstens die Halterung bzw. die Diabühne enthaltende Baugruppe umfaßt.

Der erfindungsgemäße Projektor weist den großen Vorteil auf, daß die die zuvor erwähnten Nachteile im wesentlichen bestimmenden Teile des Kondensorsystems außerhalb des Schlittens in einer feststehenden Baugruppe angeordnet sind. Dies ermöglicht eine erheblich höhere Verfahrgeschwindigkeit des Schlittens, da die lampenseitige Kondensorlinse, die im wesentlichen die Masse des Kondensorsystems bestimmt, nunmehr im Projektor feststeht. Durch die ortsfeste Anordnung der Lampe im Projektor kann diese direkt fest angeschlossen werden, wodurch die Nachteile von Kabelschleppen oder Schleifkontakten entfallen. Ferner ist die Lampe durch die ortsfeste Anordnung im Projektor vor mechanischen Beanspruchungen, die zu einem vorzeitigen Ausfall führen können, geschützt.

Für eine gute Lichtausbeute ist es dabei zweckmäßig, wenn die optische Achse der ersten Baugruppe bzw. des Lampenträgers in einem Winkel zur Bewegungsrichtung des Schlittens angeordnet ist und wenn der Schlitten ferner einen Spiegel umfaßt, der unter dem halben Winkel zwischen optischer Achse des Lampenträgers und der Bewegungsrichtung zur Bewegungsrichtung des Schlittens auf diesem angebracht ist.

Dabei erlaubt der auf dem Schlitten angeordnete Spiegel, daß in der Projektionsstellung des Schlittens das von dem Lampenträger ausgesandte Lichtbündel in die optische Achse des Projektionsobjektives fällt.

Für einen besonders kompakten Aufbau eines solchen Projektors ist es besonders zweckmäßig, wenn die optische Achse des Lampenträgers rechtwinklig zur Bewegungsrichtung des Schlittens angeordnet ist.

In einer bevorzugten Ausführungsform der Erfindung ist der Spiegel ein Kaltlichtspiegel. Dadurch wird die Ablenkung des Infrarotanteils des von dem Lampenträger ausgesandten Lichtbündels in die optische Achse und damit die thermische Belastung der Bildvorlage und des Projektionsobjektives vermindert.

Dabei ist es besonders zweckmäßig, wenn der Kaltlichtspiegel die Wärmeschutzvorrichtung für die Bildvorlage ist. Dadurch kann die Verwendung eines herkömmlichen Wärmeschutzfilters für die Bildvorlage entfallen.

In einer weiteren besonders vorteilhaften Ausführungsform eines erfindungsgemäßen Projektors ist dieser dadurch gekennzeichnet, daß die auf dem Schlitten angeordnete Baugruppe ferner eine weitere Kondensorlinse umfaßt. Diese ermöglicht in der Projektionsstellung des Schlittens die Abbildung der Lampenwendel in die Eintrittspupille des Projektionsobjektives und erhöht so die Lichtausbeute wesentlich.

Die Erfindung soll im folgenden anhand eines in der Zeichnung dargestellten Ausführungsbeispiels näher erläutert werden. Es zeigen:
- **Figur 1 -**: eine Draufsicht auf einen geöffneten erfindungsgemäßen Projektor, bei dem der Lampenträger unterhalb des Schlittens angeordnet ist, und
- **Figur 2 -**: eine schematische Seitenansicht eines Kondensorsystems eines erfindungsgemäßen Projektors.

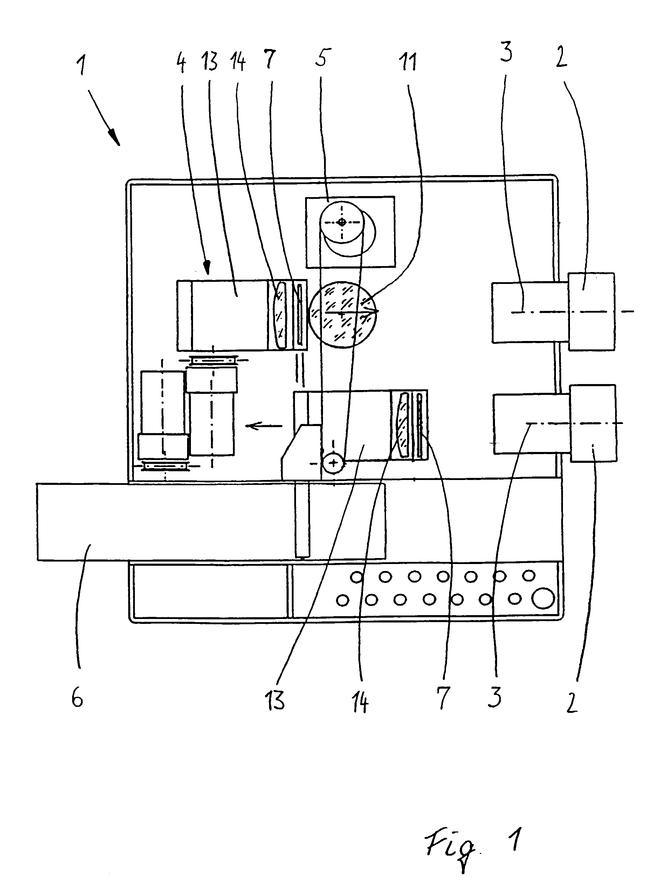

Der in Figur 1 dargestellte Projektor 1 umfaßt zwei Projektionsobjektive 2, deren optische Achsen jeweils mit 3 bezeichnet sind und zwei jeweils einem der Projektionsobjektive 2 zugeordnete Schlitten 4. Die Schlitten 4 sind annähernd parallel zu den optischen Achsen 3 der Projektionsobjektive 4 aus einer Projektionsstellung in eine Wechselstellung verfahrbar.

Über eine nicht dargestellte Steuerung ist gewährleistet, daß sich jeweils nur einer der Schlitten 4 in seiner Wechselstellung befindet. In der Wechselstellung kann durch eine Transporteinrichtung 5 eine Bildvorlage (Dia) aus einem Magazin 6 in eine auf dem Schlitten 4 angeordnete, als Diabühne 7 ausgebildete Halterung transportiert werden.

Durch eine Steuerung wird anschließend der Schlitten 4 in die Projektionsstellung verfahren.

Sobald sich der Schlitten 4 in seiner Projektionsstellung befindet, nimmt er eine Position über einem Lampenträger 8 ein.

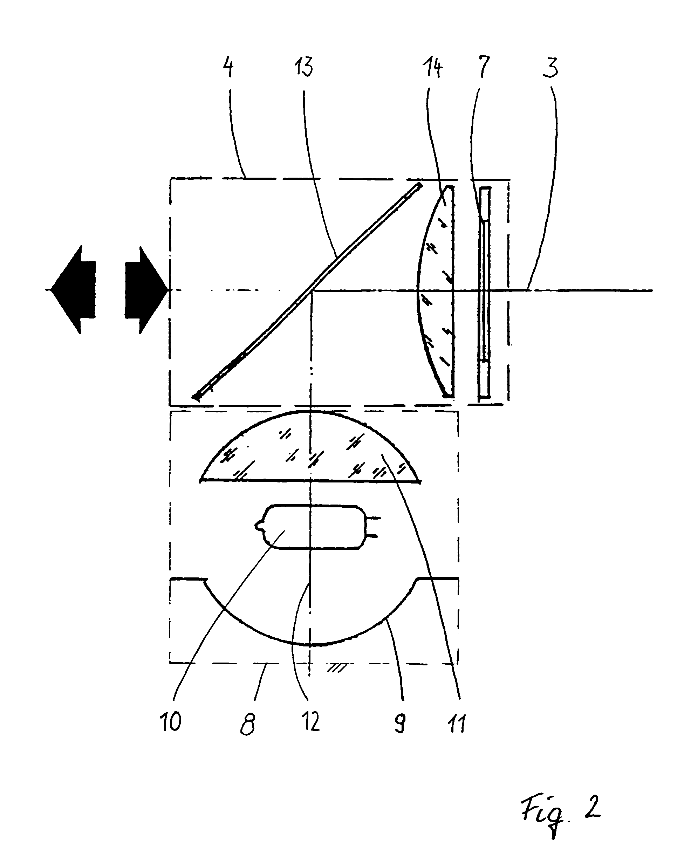

Der Lampenträger 8 ist in dem Projektor 1 ortsfest montiert und besteht aus einem Hohlspiegel 9, einer Lampe 10 und einer lampenseitigen Kondensorlinse 11 (Figur 2).

Die mit 12 bezeichnete optische Achse des Lampenträgers 8 steht dabei im wesentlichen senkrecht auf der optischen Achse 3 des zugeordneten Projektionsobjektivs 2.

Wenn sich der Schlitten 4 in seiner Projektionsstellung befindet, wird das von dem Lampenträger entlang seiner optischen Achse 12 ausgesandte Licht durch einen auf dem Schlitten 4 unter 45° zur optischen Achse 3 des Projektionsobjektivs 2 angeordneten Kaltlichtspiegels 13 in die optische Achse 3 des Projektionsobjektivs 2 gespiegelt. Dabei tritt die Infrarotstrahlung im wesentlichen ungespiegelt durch den Kaltlichtspiegel nach oben aus dem Schlitten 4 aus.

Der sichtbare Anteil des von dem Lampenträgers 8 ausgesandten Lichtes wird durch den Kaltlichtspiegel 13 in die optische Achse 3 des Projektionsobjektives 2 gespiegelt und durch eine als Sammellinse 14 ausgebildete weitere Kondensorlinse in die Eintrittspupille des Projektionsobjektivs 2 gebündelt. Direkt hinter der Sammellinse 14 ist die Diabühne 7 auf dem Schlitten angebracht.

Zum Wechseln des Dias wird der Schlitten 4 dann durch die Steuerung wieder in seine Wechselstellung verfahren, wo das Dia durch die Transporteinrichtung 5 in das Magazin 6 zurücktransportiert wird.

## Patentansprüche

1. Projektor (1) mit wenigstens einem Projektionsobjektiv (2), einem dem Projektionsobjektiv (2) zugeordneten, aus einer ersten Betriebsstellung bzw. einer Projektionsstellung in eine zweite Betriebsstellung bzw. eine Dia-Wechselstellung innerhalb des Projektors (1) annähernd parallel zur optischen Achse (3) des Projektionsobjektives (2) verfahrbaren Schlitten (4), der zumindest eine Halterung bzw. eine Diabühne (7) für eine zu projezierende durchleuchtbare Bildvorlage trägt, und wenigstens einem jeweils einem Projektionsobjektiv (2) zugeordneten Kondensorsystem zur Beleuchtung der durchleuchtbaren Bildvorlage, wobei das Kondensorsystem wenigstens eine Lampe (10), einen Hohlspiegel (9), zumindest eine Kondensorlinse (11, 14) und eine Wärmeschutzvorrichtung für die Bildvorlage und die Halterung bzw. die Diabühne (7) umfaßt, **dadurch gekennzeichnet**, daß das Kondensorsystem eine erste, im Projektor feststehende Baugruppe (8), die zumindest die Lampe (10), den Hohlspiegel (9) und eine Kondensorlinse (11) enthält, und eine zweite, auf dem Schlitten (4) angeordnete, wenigstens die Halterung bzw. die Diabühne (7) enthaltende Baugruppe umfaßt.

2. Projektor nach Anspruch 1, **dadurch gekennzeichnet**, daß die optische Achse (12) der ersten Baugruppe (8) in einem Winkel zur Bewegungsrichtung des Schlittens (4) angeordnet ist und daß der Schlitten (4) ferner einen Spiegel (13) umfaßt, der unter dem halben Winkel zwischen optischer Achse (12) der ersten Baugruppe (8) und der Bewegungsrichtung des Schlittens (4) auf diesem angebracht ist.

3. Projektor nach Anspruch 2, **dadurch gekennzeichnet**, daß die optische Achse (12) der ersten Baugruppe (8) rechtwinklig zur Bewegungsrichtung des Schlittens (4) angeordnet ist.

4. Projektor nach Anspruch 2 oder 3, **dadurch gekennzeichnet**, daß der Spiegel (13) ein Kaltlichtspiegel ist.

5. Projektor nach Anspruch 4, **dadurch gekennzeichnet**, daß der Kaltlichtspiegel (13) die Wärmeschutzvorrichtung für die Bildvorlage ist.

6. Projektor nach einem der vorhergehenden Ansprüche, **dadurch gekennzeichnet**, daß die zweite auf dem Schlitten (4) angeordnete Baugruppe ferner eine weitere Kondensorlinse (14) umfaßt.

## Claims

1. Projector (1) having at least one projection objective (2), a carriage (4) which is associated with the projection objective (2) and movable substantially parallel to the optical axis (3) of the projection objective (2) out of a first operating or projection position into a second operating or slide-changing position inside the projector (1) and which carries at least one holding device or slide stage (7) for a transilluminable image copy which is to be projected, and having at least one condenser system associated in each case with a projection objective (2) for illuminating the transilluminable image copy, the condenser system comprising at least one lamp (10), a concave mirror (9), at least one condenser lens (11, 14) and a thermal screening device for the image copy and the holding device or slide stage (7), **characterized in** that the condenser system comprises a first subassembly (8), which is fixed in the projector and comprises at least the lamp (10), the concave mirror (9) and a condenser lens (11), and a second subassembly, which is disposed on the carriage (4) and comprises at least the holding device or slide stage (7).

2. Projector according to claim 1, **characterized in** that the optical axis (12) of the first subassembly (8) is disposed at an angle to the direction of movement of the carriage (4) and that the carriage (4) further comprises a mirror (13), which is provided on the carriage (4) at an angle midway between optical axis (12) and the direction of movement of the carriage (4).

3. Projector according to claim 2, **characterized in** that the optical axis (12) of the first subassembly (8) is disposed at right angles to the direction of movement of the carriage (4).

4. Projector according to claim 2 or 3, **characterized in** that the mirror (13) is a cold-light mirror.

5. Projector according to claim 4, **characterized in** that the cold-light mirror (13) is the thermal screening device for the image copy.

6. Projector according to one of the preceding claims, **characterized in** that the second subassembly disposed on the carriage (4) additionally comprises a further condenser lens (14).

## Revendications

1. Projecteur (1) comprenant au moins un objectif de projection (2), un chariot (4) associé à l'objectif de projection (2) et déplaçable à l'intérieur du projecteur (1) approximativement parallèlement à l'axe optique (3) de l'objectif de projection (2) à partir d'une première position de service ou position de projection jusqu'à une seconde position de service ou position de changement de diapositive, le chariot portant au moins une monture ou support de diapositive (7) pour une vue translucide à projeter, le projecteur comprenant au moins un système condenseur pour l'illumination de la vue translucide, chaque système condenseur étant associé à un objectif de projection (2), le système condenseur comprenant au moins une lampe (10), un miroir creux (9), au moins une lentille de condenseur (11, 14) et un dispositif de protection contre la chaleur pour la vue et la monture ou support de diapositive (7), caractérisé en ce que le système condenseur comprend un premier sous-ensemble (8) fixe dans le projecteur, qui comprend au moins la lampe (10), le miroir creux (9) et une lentille de condenseur (11), et un deuxième sous-ensemble disposé sur le chariot (4) et comprenant au moins la monture ou support de diapositive (7).

2. Projecteur selon la revendication 1, caractérisé en ce que l'axe optique (12) du premier sous-ensemble (8) est disposé selon un angle relativement à la direction de mouvement du chariot (4), et en ce que le chariot (4) comprend en outre un miroir (13) qui est monté sur le chariot selon un angle moitié de celui entre l'axe optique (12) du premier sous-ensemble (8) et la direction de déplacement du chariot (4).

3. Projecteur selon la revendication 2, caractérisé en ce que l'axe optique (12) du premier sous-ensemble (8) est disposé à angle droit par rapport à la direction de déplacement du chariot (4).

4. Projecteur selon la revendication 2 ou 3, caractérisé en ce que le miroir (13) est un miroir à lumière froide.

5. Projecteur selon la revendication 4, caractérisé en ce que le miroir à lumière froide (13) est le dispositif de protection contre la chaleur pour la vue.

6. Projecteur selon l'une des revendications précédentes, caractérisé en ce que le second sous-ensemble disposé sur le chariot (4) comporte en outre une autre lentille de condenseur (14).
